# EUROPÄISCHE PATENTSCHRIFT

(11) **EP 1 370 837 B1**
(45) Veröffentlichungstag und Bekanntmachung des Hinweises auf die Patenterteilung: **06.10.2004**
(21) Anmeldenummer: 02726185.8
(22) Anmeldetag: 19.03.2002
(51) Int. Cl.: G01G 13/02, B65D 88/66, B65D 88/32, B65G 33/08, B65G 11/10

(54) **DOSIERVORRICHTUNG FÜR SCHÜTTGÜTER**
DOSING DEVICE FOR BULK GOODS
DISPOSITIF DE DOSAGE DE MATIERES EN VRAC

(30) Priorität: 19.03.2001 DE 10113462
(43) Veröffentlichungstag der Anmeldung: 17.12.2003
(73) Patentinhaber: BRABENDER TECHNOLOGIE KG, D-47055 Duisburg (DE)
(72) Erfinder: VOHWINKEL, Horst, 40489 Düsseldorf (DE)
(74) Vertreter: Schoenen, Norbert, Dr.
(86) Internationale Anmeldenummer: PCT/EP2002/003014
(87) Internationale Veröffentlichungsnummer: WO 2002/075260

(56) Entgegenhaltungen:
- DE-A- 2 130 596
- DE-B- 1 082 188
- DE-U- 29 510 792
- "Brabender-Flexwall - Dosierer Typ FW 18" BRABENDER-WERKSNORMEN, [Online] August 1997 (1997-08), XP002204134 Gefunden im Internet: <URL:www.brabender-technologie.com/mainpag e/ werknorm/german/fw18_d.pdf> [gefunden am 2002-06-24]
- "Schneckendosierer- Einzigartige neue Trapezform" CHEMIE - PRODUKTION, [Online] 7. Dezember 2001 (2001-12-07), XP002204135 Gefunden im Internet: <URL:http://mi.svhfi.securitas.net/cp/prod uktberichte/Brabender/02053/> [gefunden am 2002-07-01]

## Beschreibung

Die vorliegende Erfindung betrifft eine Dosiervorrichtung für Schüttgüter, umfassend ein Haltegestell, in dem ein Trog mit einer Dosierschnecke angeordnet ist, ferner einen Antriebsmotor und wenigstens ein erstes Rüttel-Paddel, wobei der Trog mindestens zwei sich gegenüber liegende Seitenwände aufweist, mindestens eine dieser Seitenwände flexibel ist und das Rüttel-Paddel an dieser flexiblen Seitenwand angeordnet ist.

Vorzugsweise ist die Dosiervorrichtung wie folgt ausgebildet: Der gesamte Trog besteht aus einem flexiblen Material und ist in das Haltegestell einhängbar. Der Antriebsmotor ist im rückwärtigen Bereich des Haltegestells angeordnet. Die Rüttel-Paddel sind seitlich neben dem eingehängten Trog im Haltegestell angeordnet.

Dosiervorrichtungen dieser Art sind bekannt und finden in verschiedenen Industriebereichen Verwendung, beispielsweise in chemischen, pharmazeutischen, lebensmitteltechnischen Betrieben usw. Um das Schüttgut, z.B. Pulver, Granulat, Pellets, Flakes, Chips, Flocken, Fasern und dergleichen fließfähig zu halten und ein Anbacken an den Trogwänden zu verhindern, sind zumindest an den Seitenwänden des in der Draufsicht quadratischen Troges Einrichtungen zum periodischen Auswölben vorgegebener Wandbereiche nach innen vorgesehen, welche durch eine Aktivierung des Schüttgutes das natürliche Fließverhalten des Schüttgutes unterstützen, um eine Kompaktierung, eine Brückenbildung sowie Anbackungen zu verhindern.

Aus der DE-U-295 10 792 ist ein beidseitiger Bewegungsmechanismus für einen flexiblen Austragbehälter eines Schüttgut - Dosierers bekannt.

Durch den Prospekt Nr. 1000 d/e/f LG 3, "Der Brabender-FlexWall®-Dosierer" der Brabender Technologie KG, Kulturstraße 55-73, D-47055 Duisburg, ist eine solche Dosiervorrichtung bekannt, bei der gegen die Trogwände von außen sogenannte Paddel schlagen, die auf motorisch angetriebenen Schwingwellen angeordnet sind. Dabei sind für die Dosierschnecke einerseits und die Paddel andererseits jeweils eigene Antriebsmotoren vorgesehen. Der Einbau von zwei Antriebsmotoren jeweils mit ihrer mechanischen und elektrischen Installation machen die Dosiervorrichtung konstruktiv, montagetechnisch sowie auch hinsichtlich des erforderlichen Einbauraumes und des Gesamtgewichtes der Vorrichtung aufwendig und teuer.

Trotz der Vorteile der genannten Dosiervorrichtung ist dieser im Hinblick auf den Massenfluss, die Verhinderung von Gewölbebildungen und Schüttgutbrücken im Trog, insbesondere bei schlecht fließenden Schüttgütern, noch verbesserungsfähig.

Der Erfindung liegt daher die Aufgabe zugrunde, bei der eingangs genannten Dosiervorrichtung eine weitere erhebliche Verbesserung des Massenflusses mit einer besonders effektiven Verhinderung von Gewölbebildungen im Trog zu erreichen, wobei bereits gebildete Schüttgutbrücken schnell und wirksam gebrochen werden. Selbst äußerst schlecht fließfähige und stark zum Zusammenbacken sowie zum Anbacken an den Trogwänden neigende Schüttgüter sollen problemlos dosiert werden können.

Diese Aufgabe wird bei der eingangs genannten Dosiervorrichtung erfindungsgemäß dadurch gelöst, dass die Oberkanten der genannten Seitenwände nichtparallel zueinander ausgerichtet sind und dass die Oberkauten der nichtparallelen Seitenwände in Richtung des Auslasses der Dosierschnecke aufeinander zu laufen.

Das Problem eventueller Schüttgutbrücken und Gewölbebildungen wird besonders vorteilhaft und effektiv durch die Kombination der erfindungsgemäßen Geometrie des Troges mit den auf die entsprechenden Seitenwände wirkenden Paddeln erreicht.

Dabei ist es besonders vorteilhaft, wenn die Seitenwände des Troges mit den nichtparallelen Oberkanten zum Bodenbereich hin keilförmig aufeinander zu laufen und die Dosierschnecke in diesem Bodenbereich des Troges angeordnet ist.

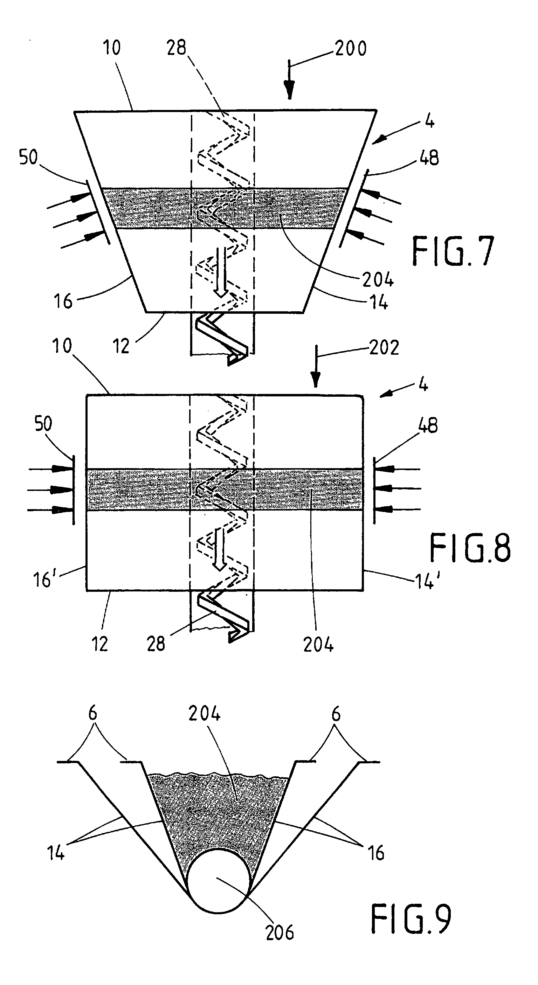

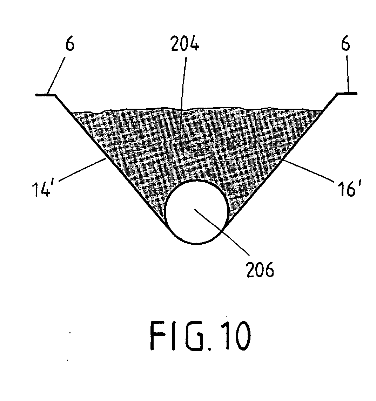

Durch diese Bauform des Troges (siehe auch die Figuren 7 und 9) ergeben sich in der Richtung von vorn am Schneckenauslass nach hinten unterschiedliche Neigungswinkel der Seitenwände mit den nichtparallelen Oberkanten. Durch diese Troggeometrie kann sich eine Schüttgutbrücke bzw. ein Gewölbe erst gar nicht oder nur instabil ausbilden. Eine sich bei schlecht fließendem Schüttgut eventuell dennoch gebildete Schüttgutbrücke wird durch die Bewegung der auf die flexiblen Seitenwände einwirkenden Paddel noch wirksamer und schneller destabilisiert und zerstört, weil die Seitenwände, die die Auflager für die Schüttgutbrücke bilden, anders als bei Trögen mit rechteckiger Geometrie (siehe auch die Figuren 8 und 10) nicht parallel zueinander verlaufen.

Durch die Schrägstellung der Paddel, die parallel zur jeweiligen flexiblen Seitenwand verlaufen, wirkt eine dynamische Querkomponente in Richtung der Dosierschnecke und durch die Schrägstellung der Seitenwände wirkt zusätzlich eine statische Querkomponente auf das Schüttgut, wobei die Kombination beider Querkomponenten zur Verhinderung bzw. Zerstörung von Schüttgutbrücken besonders effektiv ist. Dies gilt insbesondere dann, wenn zwei gegenüber liegende Paddel am Trog angeordnet sind und sich die Paddel nicht gegenläufig, sondern gleichläufig bewegen. Eine gegenläufige Bewegung der Paddel, bei der die Paddel sich also aufeinander zu und dann wieder voneinander weg bewegen, ist in der Regel nämlich nicht erwünscht, da diese Arbeitsweise zu einer Kompaktierung des im Trog befindlichen Schüttgutes führen würde. Dies gilt insbesondere für Schüttgüter, die zu dem bekannten und gefürchteten "Schneeball-Effekt" neigen, nämlich dem Zusammenbacken und Kompaktieren, falls ein auch nur geringer Druck ausgeübt wird.

Erfindungsgemäß wird vorgeschlagen, dass die Oberkanten der nichtparallelen Seitenwände in Richtung des Auslasses der Dosierschnecke aufeinander zu laufen. Da nämlich die flexiblen, sich periodisch vor- und zurückwölbenden Seitenwände infolge ihrer Schrägstellung das Schüttgut nach hinten zum breiten Ende des Troges werfen, gelangt das Schüttgut gezielt zu demjenigen Teil des Bodenbereichs des Troges, an welchem sich der Schneckengang füllt. Die Abgabe des Schüttgutes erfolgt an dem schmalen Ende des Troges, an welchem der Auslass angeordnet ist. Mit dieser Ausgestaltung wird ein besonders vorteilhaftes synergistisches Zusammenwirken der Merkmale der Troggeometrie und der Anordnung des Auslasses erreicht, die zu einer optimalen Restmengenentleerung der Dosiervorrichtung führt.

In einer weiteren bevorzugten Ausführungsform der Brfindung weist der Trog in der Draufsicht von oben eine Trapezform auf, wobei die Dosierschnecke im wesentlichen. im rechten Winkel zu den parallelen Seiten des Trapezes angeordnet ist. Dabei wird unter einem Trapez in üblicher Weise ein ebenes Viereck mit zwei parallelen, aber nicht gleich langen Seiten verstanden.

Von Vorteil ist es, wenn an jeder der genannten sich gegenüber liegenden Seitenwände jeweils mindestens ein Rüttel-Paddel angeordnet ist und beide Seitenwände flexibel sind. Das Schüttgut wird damit von beiden Seiten der Dosiervorrichtung mechanisch bewegt.

Wenn eine größere Dosierleistung als die einer einzelnen Dosiervorrichtung gewünscht wird, ist es günstiger, mehrere Standard-Dosiervorrichtungen im Kreis um die Abgabestelle herum anzuordnen, als für den einen Zweck eine Sonderanfertigung einer einzigen entsprechend größeren Dosiervorrichtung bauen zu lassen. Auch die Wartung und die Beschaffung von Ersatzteilen wird dadurch vereinfacht. Für eine möglichst kompakte Anordnung der einzelnen Dosiervorrichtungen im Kreis ist es dann besonders vorteilhaft, wenn der Winkel, den die nichtparallelen Oberkanten einschließen, einen ganzzahligen Bruchteil des Vollkreises bildet und insbesondere 60 Grad beträgt.

Aus den gleichen Gründen ist es von Vorteil, wenn eine Anordnung von mehreren gleichen Dosiervorrichtungen vorgesehen ist, die im geschlossenen oder offenen Kreis um eine zentrale Abgabestelle herum angeordnet sind.

Weiterhin wird vorgeschlagen, dass der Antriebsmotor zwischen einer mit der Dosierschnecke gekuppelten Betriebsstellung und einer entkuppelten Außerbetriebsstellung verschwenkbar ist, dass das bzw. die Rüttel-Paddel mit einer Schwingwelle über einen Schwingantrieb antreibbar ist bzw. sind, dass Mittel, insbesondere Getriebemittel, für eine Schwingantriebsverbindung zwischen dem Antriebsmotor der Dosierschnecke und der Schwingwelle des Rüttel-Paddels bzw. der Rüttel-Paddel vorgesehen sind.

Der Schwingantrieb treibt vorzugsweise eine im wesentlichen parallel zu einer Seitenwand des Troges angeordnete Schwingwelle mit dem Rüttel-Paddel an.

Erreicht wird damit, dass die Dosiervorrichtung gegenüber der oben genannten bekannten Dosiervorrichtung konstruktiv und montagetechnisch einfacher ist, einen geringeren Einbauraum erfordert, ein geringeres Baugewicht hat und dass die Dosierschnecke und die Lagerung zur Demontage auf einfache und schnelle Weise nach hinten herausgezogen werden kann.

Vorzugsweise ist die aus dem Getriebemittel und dem Antriebsmotor der Dosierschnecke bestehende Baugruppe komplett schwenkbar angeordnet, so dass die Dosierschnecke mit Lagerung nach hinten, also entgegen der Förderrichtung, herausgezogen werden kann.

Es hat sich gezeigt, dass - auch unter Berücksichtigung des konstruktiven und baulichen Aufwandes für diese Getriebemittel - der Gesamtaufwand und damit der Gesamtpreis der erfindungsgemäßen Dosiervorrichtung niedriger ist als bei einer Dosiervorrichtung der bekannten Art.

Eine bevorzugte konstruktive Lösung sieht vor, dass die Getriebemittel dem verschwenkbaren Antriebsmotor zugeordnet sind und Verbindungsmittel umfassen, welche die Antriebsverbindung von den Getriebemitteln zu der Schwingwelle des Paddels auch beim Verschwenken des Antriebsmotors in die Außerbetriebsstellung ohne Demontage irgendwelcher Teile aufrecht erhalten, wie anhand eines Ausführungsbeispieles genauer dargelegt wird. Die Getriebemittel können gemäß einer anderen Ausgestaltung auch dem Haltegestell zugeordnet sein und beispielsweise beim Verschwenken des Antriebsmotors in dessen Betriebsstellung, ähnlich wie die Dosierschnecke, mit diesem gekuppelt werden, oder aber mit einem Getriebeelement im Antriebszug der Dosierschnecke ständig in Antriebsverbindung stehen, wie anhand eines weiteren Ausführungsbeispiels gezeigt wird.

Eine konstruktive Lösung der Erfindung sieht vor, dass die Mittel einen mit dem Antriebsmotor antriebsverbundenen Kurbelmechanismus umfassen, der über eine Kurbelstange mit einem an der Schwingwelle angeordneten Kurbelarm verbunden ist. Kurbelmechanismen sind konstruktiv sehr einfache Bauelemente und finden bei der Umsetzung von Drehbewegungen in Schwingbewegungen vielfache Anwendung.

Um die Amplitude der Paddel verändern zu können, ist weiter vorgesehen, dass die Exzentrizität des antriebsmotorseitigen und/oder des schwingwellenseitigen Anlenkpunktes der Kurbelstange am Kurbelmechanismus bzw. am Kurbelarm variabel ist. Dabei wird die Amplitude der Schwingbewegung des Paddels jeweils größer, je größer die Exzentrizität des jeweiligen Anlenkpunktes ist.

In einer bevorzugten Ausgestaltung der Erfindung umfaßt der antriebsmotorseitige Kurbelmechanismus eine drehangetriebene Kurbelscheibe mit einem oder mehreren exzentrisch zur Drehachse der Kurbelscheibe angeordneten Anlenkpunkten für die Kurbelstange. Eine solche Lösung ist konstruktiv äußerst einfach und billig darstellbar.

In einer weiteren Ausgestaltung der Erfindung ist vorgesehen, dass die Kurbelscheibe ein Abtriebs-Getrieberad eines vom Antriebsmotor angetriebenen Rädergetriebes ist. Derartige Rädergetriebe erlauben es in einfacher Weise, unterschiedliche Unter- oder Übersetzungsverhältnisse zwischen der Drehfrequenz des Antriebsmotors der Dosierschnecke und der Schlagfrequenz des Paddels herzustellen.

Um dieses Unter- bzw. Übersetzungsverhältnis von Schneckendrehzahl zu Paddelfrequenz an unterschiedliche Schüttgüter anpassen zu können, ist in weiterer Ausgestaltung der Erfindung vorgesehen, dass das Abtriebs-Getrieberad (Kurbelscheibe) und/oder ein damit zusammenwirkendes Antriebs-Getrieberad des Rädergetriebes zum Zwecke einer Änderung der Übersetzung austauschbar sind, um andere Getriebepaarungen zu schaffen.

Eine besonders einfache konstruktive Lösung ergibt sich dann, wenn die Kurbelscheibe eine Zahnriemenscheibe ist, die über einen Zahnriemen mit einer auf der Ausgangswelle des Antriebsmotors angeordneten, als Zahnriemenscheibe ausgebildeten Antriebs-Getrieberad antriebsverbunden ist. Derartige Zahnriemengetriebe haben den Vorteil, dass sie weitgehend wartungsfrei sind und sehr geräuscharm laufen.

Bei der weiter vorne erwähnten Lösung mit dem verschwenkbaren Antriebsmotor zugeordneten Getriebemitteln ist vorgesehen, dass der antriebsseitige Kurbelmechanismus an einem den Antriebsmotor tragenden, um die Schwenkachse schwenkbar am Haltegestell gelagerten Träger angeordnet ist, und dass die Kurbelstange mit dem schwingwellenseitigen Kurbelarm über ein Scharniergelenk verbunden ist, dessen Scharnierachse bei einer vorgegebenen Schwingstellung des Kurbelarmes mit der Schwenkachse des Trägers wenigstens annähernd fluchtet. Das Scharniergelenk ermöglicht bei der vorgegebenen Schwingstellung des Kurbelarmes eine Schwenkbewegung der Kurbelstange um die Scharnierachse, wenn der Träger um die zur Scharnierachse fluchtend angeordnete Schwenkachse verschwenkt wird. Die vorbeschriebene Lösung ermöglicht in besonders einfacher Weise ein Nachrüsten von Dosiervorrichtungen ohne Paddelmechanismus.

Um die Schwingbewegung der Kurbelstange in der Kurbelebene zu ermöglichen, ist die Kurbelstange mit dem Scharniergelenk über ein weiteres Verbindungsschwenkgelenk mit einer zur Scharnierachse und zur Längsachse der Kurbelstange rechtwinklig stehenden Gelenkachse verbunden.

Dosiervorrichtungen der eingangs genannten Art haben im allgemeinen auf beiden Seiten des Troges angeordnete Paddel; in einem solchen Fall ist erfindungsgemäß weiter vorgesehen, dass wenigstens ein weiteres Paddel auf der dem ersten Paddel abgewandten Seite eines Troges im Haltegestell angeordnet ist und dass eine Schwingwelle des weiteren Paddels mit der Schwingwelle des ersten Paddels über einen Getriebemechanismus gekoppelt ist.

Bei einem in Draufsicht trapezförmigen Trog sind die Schwingachsen der beiden Paddel nicht parallel, sondern schräg zueinander angeordnet, so dass die Bewegungen nicht geradlinig erfolgen und eine entsprechend aufwändige Konstruktion der Kopplung bzw. der Kraftübertragung erfordern.

Dieser Getriebemechanismus umfaßt vorzugsweise jeweils einen auf jeder Schwingwelle angeordneten Kurbelarm, die über eine Kurbelstange miteinander verbunden sind. Vorgeschlagen wird daher, dass die Mittel für eine Schwingantriebsverbindung zwischen dem Antriebsmotor und der Schwingwelle als Getriebemechanismus ausgebildet sind, welcher jeweils einen auf jeder Schwingwelle angeordneten Kurbelarm umfasst, und dass die Kurbelarme über eine Kurbelstange miteinander verbunden sind.

Mehrere Ausgestaltungen der Erfindung sind in der Zeichnung dargestellt und im folgenden näher beschrieben. Es zeigen:
- Figur 1: schematisch eine Dosiervorrichtung in einer Seitenansicht;
- Figur 2: eine Dosiervorrichtung (gezeichnet ohne den Trog 4) gemäß der Figur 1 in einer Draufsicht, wobei der Antriebsmotor eine Betriebsstellung einnimmt;
- Figur 3: in einer verkleinerten Darstellung eine Draufsicht (gezeichnet ohne den Trog 4) etwa gemäß der Figur 2, wobei der Antriebsmotor in eine Außerbetriebsstellung verschwenkt ist;
- Figur 4: schematisch Einzelheiten der Getriebemittel für den Schwingantrieb der Paddel in einer Ansicht zur Rückwand des Haltegestells hin;
- Figur 5: Einzelheiten des Schwingantriebes für ein zweites Paddel in einer Ansicht entgegen der Richtung des Pfeiles 18 in Figur 2;
- Figur 6: in einer Seitenansicht etwa entsprechend der Figur 1 eine andere Ausgestaltung der Dosiervorrichtung;
- Figur 7: eine Draufsicht auf einen erfindungsgemäßen trapezförmigen Trog;
- Figur 8: eine Draufsicht auf einen rechteckigen Trog nach dem Stand der Technik;
- Figur 9: eine Ansicht entsprechend dem Pfeil 200 in Figur 7 in das Innere des Troges;
- Figur 10: eine Ansicht in Richtung des Pfeils 202 in Figur 8, ebenfalls in das Innere des Troges.

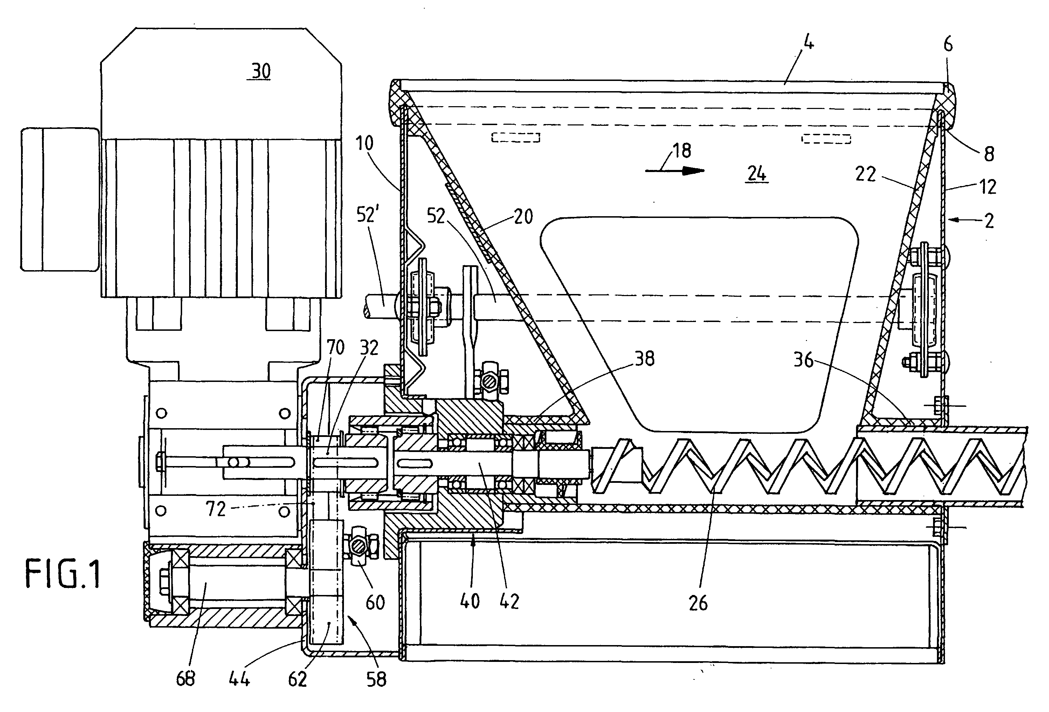

Die in den Figuren 1 bis 5 dargestellte Dosiervorrichtung umfasst ein etwa gehäuseartiges Haltegestell 2, in dessen obere Öffnung ein Trog 4 derart eingehängt werden kann, dass die oberen Umfangsränder 6 des Troges 4 die oberen Umfangsränder 8 des gehäuseartigen Haltegestells 2 übergreifen.

Das gehäuseartige Haltegestell 2 besitzt eine Rückwand 10 und eine Vorderwand 12, die vertikal und zueinander parallel stehen, sowie zwei Seitenwände 14, 16, die ebenfalls vertikal, jedoch in Richtung des Pfeiles 18 konvergierend verlaufen, so dass das Haltegestell 2 in einer Draufsicht trapezförmig mit einer zentralen Symmetrieebene 19 ist. Eine derartige Form wird vorzugsweise dann gewählt, wenn mehrere Dosiervorrichtungen in einem Kreis um eine zentrale Abgabestelle herum angeordnet werden sollen.

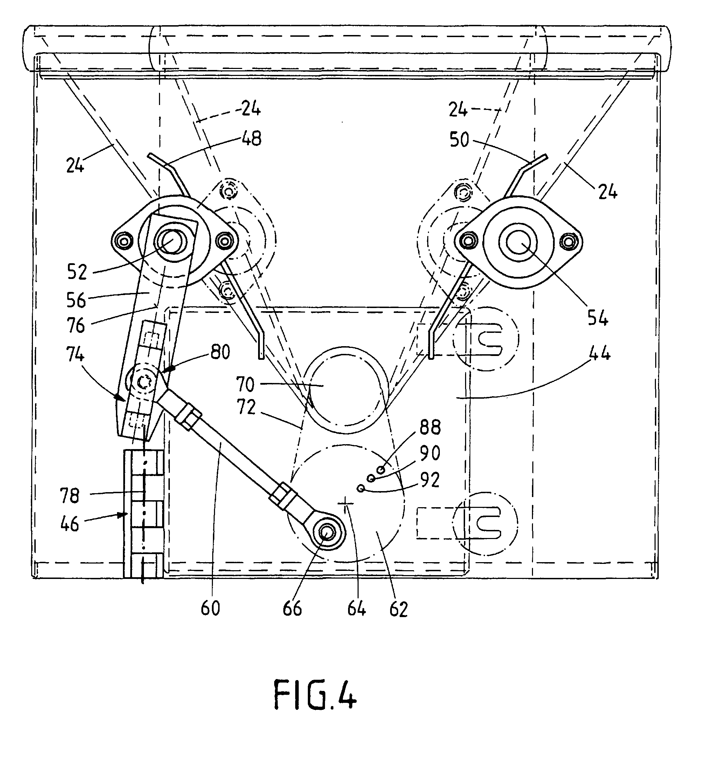

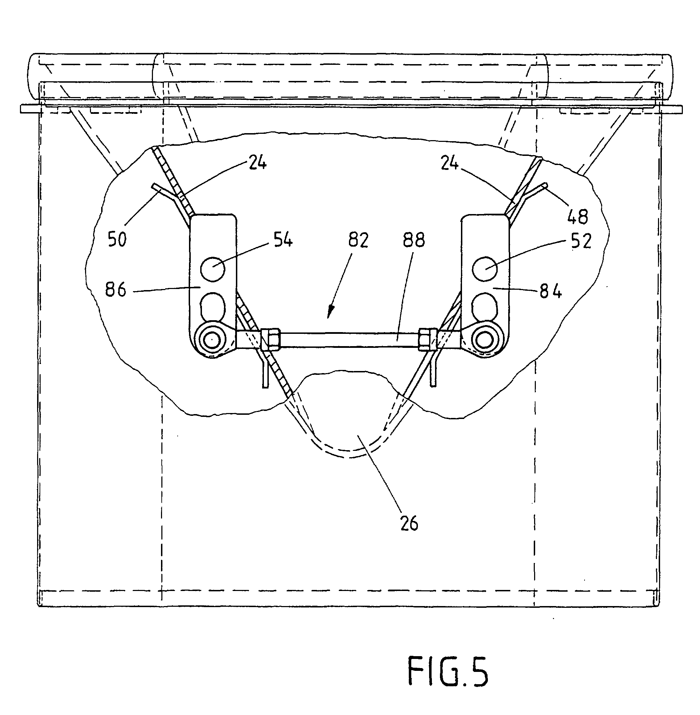

Der Trog 4 ist etwa keilförmig ausgebildet. Er hat eine Rückwand 20 und eine Vorderwand 22, die jeweils unterschiedliche Neigungswinkel zur Vertikalen aufweisen, sowie zwei Seitenwände 24 (siehe auch Figuren 4 und 5), die im dargestellten Ausführungsbeispiel zu einer vertikalen Längsmittelebene des Troges 4, die mit der Symmetrieebene 19 des Haltegestells 2 zusammenfällt, symmetrisch angeordnet sind und nach unten zu konvergieren, so dass sie eine Bodenrinne 26 bilden. Die Seitenwände 24 verlaufen außerdem in Anpassung an die Trapezform des Haltegestells von der Rückwand 20 zur Vorderwand 22 hin konvergierend.

In der Bodenrinne 26 wird in ebenfalls an sich bekannter Weise eine Dosierschnecke 28 angeordnet, die von einem im rückwärtigen Bereich des Haltegestells 2 angeordneten Antriebsmotor 30 über eine mit der Dosierschnecke 28 kuppelbare Antriebswelle 32 angetrieben werden kann, und die das im Trog 4 befindliche Schüttgut über einen Auslassstutzen 34 nach außen befördert. Bei in das Haltegestell 2 eingehängtem Trog 4 ist der Auslassstutzen 34 in einem vorderen Lageransatz 36 des Troges 4 aufgenommen; ein hinterer Lageransatz 38 des Troges 4 dient zur Aufnahme des vorderen Abschnittes einer Lagerungs- und Kupplungsanordnung 40 mit einer Verbindungswelle 42 und deren Lagerung. Die Verbindungswelle 42 stellt eine Antriebsverbindung zwischen der Antriebswelle 32 des Antriebsmotors 30 und der Dosierschnecke 28 her, wie sich aus den Figuren 1 bis 3 ohne weiteres ergibt.

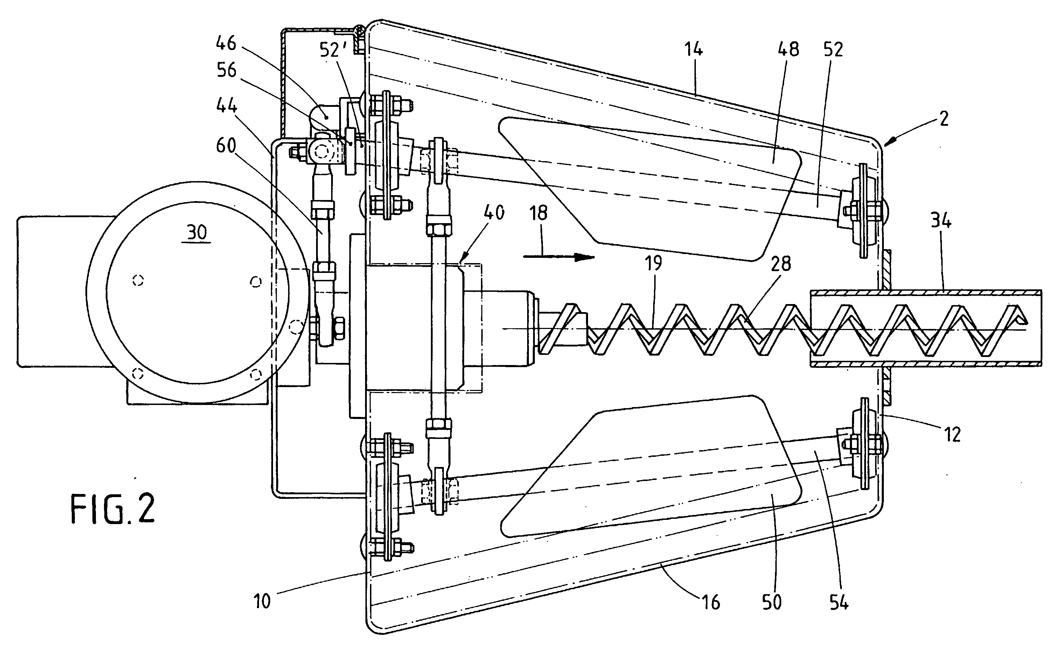

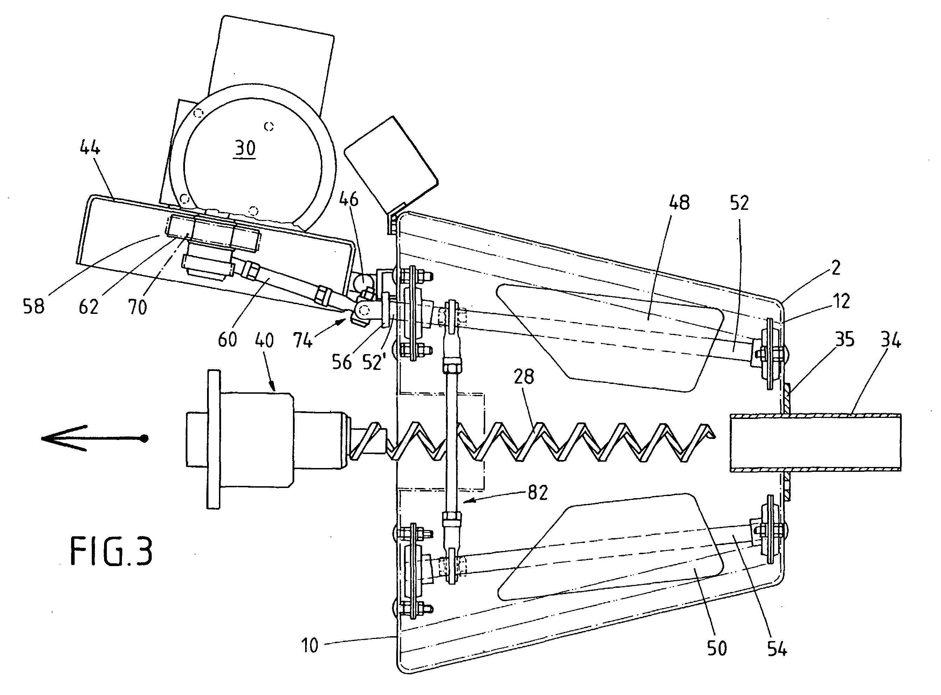

Der Antriebsmotor 30 ist an einem Träger 44 befestigt, welcher an der Rückwand 10 des Haltegestells 2 mittels eines Scharniers 46 um eine vertikale Scharnierachse 78 aus der in Figur 2 dargestellten Betriebsstellung in die in Figur 3 dargestellte Außerbetriebsstellung verschwenkt werden kann. Um beispielsweise den Trog 4 aus dem Haltegestell 2 herausnehmen zu können, kann der Träger 44 mit dem daran angeordneten Antriebsmotor 30 in die in Figur 3 dargestellte Außerbetriebsstellung verschwenkt werden, wobei die Antriebswelle 32 von der Verbindungswelle abgekuppelt wird, woraufhin die Lagerungs- und Kupplungsanordnung 40 mitsamt der damit gekuppelten Dosierschnecke 28 nach hinten herausgezogen werden kann; ferner kann der mittels eines Flansches 35 an der Vorderwand 12 befestigte Auslassstutzen 34 gelöst und nach vorne abgezogen werden. Damit ist der Trog 4 freigegeben und kann nach oben aus dem Haltegestell 2 herausgehoben werden. Das Einsetzen eines Troges 4 in das Haltegestell 2 erfolgt analog in umgekehrter Weise.

Der Trog 4 besteht aus einem weichen Kunststoffmaterial, vorzugsweise aus einem PU-Material, so dass seine Wände leicht verformbar, d.h. nach innen auswölbbar sind. Wie die Figuren zeigen, sind im Haltegestell 2 jeweils seitlich neben dem Trog 4 sogenannte Rüttel-Paddel 48, 50 vorgesehen, die jeweils auf zugeordneten Schwingwellen 52 bzw. 54 angeordnet sind. Die Paddel 48, 50 führen Drehschwingungsbewegungen aus, wobei sie an die Seitenwände 24 des Troges 4 schlagen und das im Trog befindliche Schüttgut lockern. Wie die Figuren 1 bis 4 erkennen lassen, sind die Schwingwellen 52, 54 jeweils über zugeordnete, nicht näher bezeichnete Lager an der Rückwand 10 bzw. der Vorderwand 12 des Haltegestells 2 befestigt. Die Schwingwelle 52 ist über die Rückwand 10 der Haltevorrichtung 2 nach außen verlängert; an der Verlängerung 52' ist ein Kurbelarm 56 angeordnet, über den eine Drehschwingbewegung in die Schwingwelle 52 eingeleitet werden kann.

Der Schwingantrieb der Schwingwelle 52 wird über besondere Getriebemittel vom Antriebsmotor 30 der Dosierschnecke 28 abgeleitet. Diese Getriebemittel umfassen einen mit dem Antriebsmotor 30 antriebsverbundenen Kurbelmechanismus 58, der über eine Kurbelstange 60 mit dem Kurbelarm 56 verbunden ist. Der Kurbelmechanismus 58 besteht im wesentlichen aus einer drehangetriebenen Kurbelscheibe 62 mit einem exzentrisch zu dessen Drehachse 64 angeordneten Anlenkpunkt 66 für die Kurbelstange 60. Die Kurbelscheibe 62 ist über eine Kurbelscheibenwelle 68 am Träger 44 gelagert, an dem auch der Antriebsmotor 30 befestigt ist. Die Kurbelscheibe 62 bildet ein Abtriebs-Getrieberad eines vom Antriebsmotor angetriebenen Rädergetriebes; auf der Antriebswelle 32 des Antriebsmotors 30 ist ein Antriebs-Getrieberad 70 aufgekeilt. Das Antriebs-Getrieberad 70 und die Kurbelscheibe 62 sind jeweils als Zahnriemenscheiben ausgebildet, die über einen Zahnriemen 72 antriebsverbunden sind.

Wie insbesondere aus Figur 3 ersichtlich ist, ist der Kurbelmechanismus 58 fest am Träger 44 angeordnet und wird beim Verschwenken des Antriebsmotors 30 in dessen Außerbetriebsstellung mit verschwenkt. Damit die Antriebsverbindung von dem Kurbelmechanismus 58 zum Kurbelarm 56 der Schwingwelle 52 auch bei dieser Schwenkbewegung erhalten bleiben kann, ist die Kurbelstange 60 mit dem Kurbelarm 56 über ein Scharniergelenk 74 verbunden, dessen Scharnierachse 76 bei einer vorgegebenen, in der Figur 4 dargestellten Schwingstellung des Kurbelarmes 56 wenigstens annähernd mit der Schwenkachse 78 des Trägers 44 fluchtet. In dieser Stellung bleibt der Abstand des Anlenkpunktes 66 an der Kurbelscheibe 62 und der Scharnierachse 76 des Scharniergelenkes 74 beim Verschwenken des Trägers 44 gleich, so dass die Verschwenkbewegung des Trägers 44 nicht behindert wird. Es hat sich darüber hinaus gezeigt, dass dann, wenn der Kurbelarm 56 diese vorgegebene Schwingstellung nicht einnimmt, dennoch ein Verschwenken des Trägers 44 möglich ist, da sich die Kurbelscheibe 62 und/oder der Kurbelarm 56 automatisch in eine gegenseitige, die Schwenkung nicht behindernde Stellung ziehen.

Die Kurbelstange 60 ist mit dem um die Scharnierachse 76 drehbaren Teil des Scharniergelenkes 74 über ein weiteres Verbindungsschwenkgelenk 80 verbunden, welches die Kurbelbewegung der Kurbelstange 60 infolge der Drehung der Kurbelscheibe 62 ermöglicht.

Wie insbesondere die Figuren 2, 3 und 5 erkennen lassen, sind die Schwingwelle 52 des Paddels 48 und die Schwingwelle 54 des Paddels 50 über einen innerhalb des Haltegestells 2 angeordneten Getriebemechanismus 82 miteinander antriebsverbunden. Dieser Getriebemechanismus 82 umfaßt einen an der Schwingwelle 52 angeordneten Kurbelarm 84, einen an der Schwingwelle 54 angeordneten Kurbelarm 86 und eine die Kurbelarme 84, 86 verbindende Kurbelstange 88.

Auf diese Weise werden die beiden Paddel 48 und 50 jeweils gleichsinnig angetrieben.

Um die Schwingfrequenz der Paddel 48, 50 zu verändern, können das Antriebsgetrieberad 70 und/oder die Kurbelscheibe 62 ausgewechselt werden derart, dass sich unterschiedliche Übersetzungsverhältnisse zwischen der Drehfrequenz der Antriebswelle 32 und damit der Dosierschnecke 28 einerseits und der Schwingfrequenz der Schwingwellen 52, 54 andererseits ergeben. Es hat sich gezeigt, dass bei schlecht fließenden Schüttgütern ein Verhältnis von 1 : 1 vorteilhaft ist; bei sehr gut fließenden Schüttgütern kann die Drehzahl der Dosierschnecke drei mal so hoch wie die Schwingfrequenz der Paddel sein. Bei einer Standardeinstellung, bei der die Drehfrequenz der Dosierschnecke zwei mal so hoch wie die Schwingfrequenz der Paddel ist, wird ein weiter Bereich vieler Schüttgüter optimal abgedeckt.

Um die Schwingamplitude der Paddel 48 und 50 zu variieren, sind an der Kurbelscheibe 62 mehrere Anlenkpunkte 66, 88, 90, 92 zum Anlenken der Kurbelstange 60 vorgesehen, wie in Figur 4 schematisch angedeutet ist.

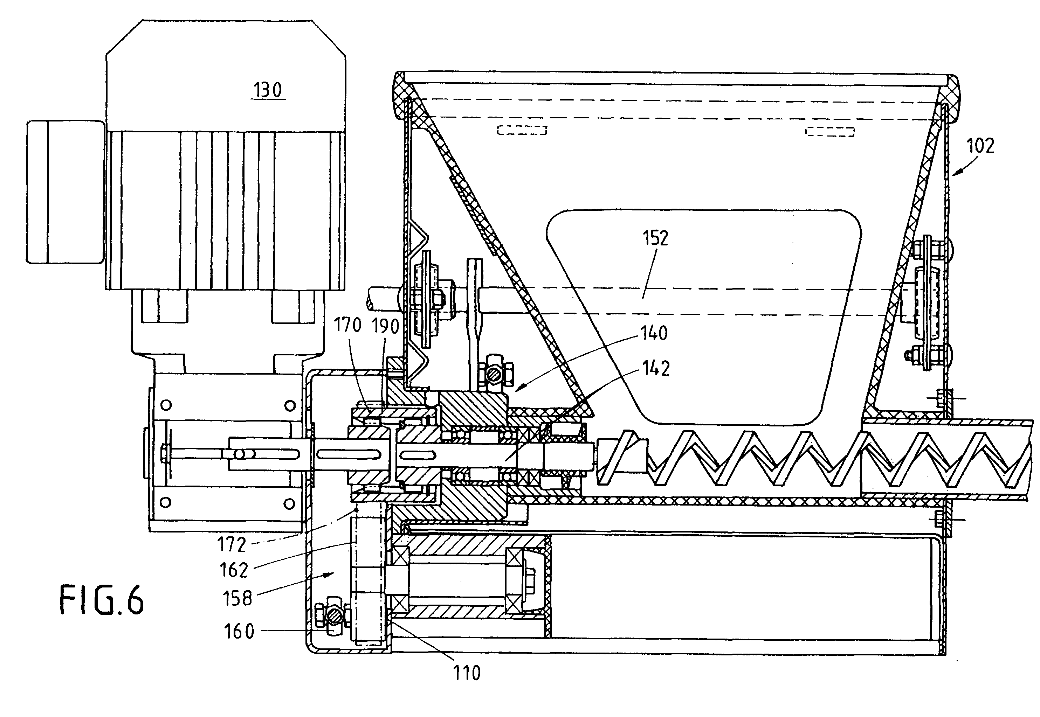

Figur 6 zeigt eine Dosiervorrichtung in einer der Figur 1 entsprechenden Ansicht. Die Dosiervorrichtung der Figur 6 unterscheidet sich von der Dosiervorrichtung der Figur 1 nur in der Anordnung und Ausbildung des Kurbelmechanismus, so dass es hier genügt, nur diesen zu beschreiben. Der Kurbelmechanismus 158 umfaßt wiederum eine als Zahnriemenscheibe ausgebildete Kurbelscheibe 162 und ein ebenfalls als Zahnriemenscheibe ausgebildetes Antriebs-Getrieberad 170. Im Gegensatz zur Anordnung gemäß der Figur 1 ist die Kurbelscheibe 162 an einem unteren Abschnitt der Rückwand 110 des Haltegestells 102 gelagert. Das Antriebs-Getrieberad 170 wird durch eine Kupplungsbuchse 190 gebildet, die Bestandteil der Lagerungs- und Kupplungsanordnung 140 ist und mit der Verbindungswelle 142 drehverbunden ist. Die Kurbelscheibe 162 und das Antriebs-Getrieberad 170 sind wiederum mittels eines Zahnriemens 172 miteinander verbunden. Da der Kurbelmechanismus 158 mit dem Haltegestell 102 verbunden ist, verbleibt er beim Verschwenken des Antriebsmotors 130 in seine Außerbetriebsstellung an seinem Platz. Deshalb kann ein Scharniergelenk entsprechend dem Scharniergelenk 74 entfallen, so dass der Kurbelarm 160 lediglich über ein dem Verbindungsschwenkgelenk 80 entsprechendes Verbindungsschwenkgelenk mit dem nicht dargestellten Kurbelarm der Schwingwelle 152 verbunden wird.

In den Figuren 7 bis 10 werden die Vorteile der Trapezform des Troges verdeutlicht. Der Arbeitsraum der Dosierschnecke 28 ist in den Figuren 9 und 10 mit dem Bezugszeichen 206 bezeichnet. Durch die trapezförmige Bauform des Troges 4 (Figuren 7 und 9) ergeben sich in der Richtung von vorn am Schneckenauslass nach hinten unterschiedliche Neigungswinkel der Seitenwände 14, 16, wie besonders aus Figur 9 hervorgeht. Durch diese Troggeometrie wird eine sich bei schlecht fließendem Pulver eventuell gebildete Produktbrücke 204 durch die Bewegung der Paddel 48, 50 noch wirksamer zerstört, weil die Trogwände 14, 16, die die Auflager für die Produktbrücke 204 bilden, anders als bei Trögen mit rechteckiger Geometrie (Figuren 8 und 10) nicht parallel zueinander verlaufen.

Die Bewegung der flexiblen Trogwände 14, 16 durch Paddel oder andere Bauelemente bewirken bei der Trapezbauform entsprechend Figur 7 eine schräge, in Figur 7 durch Pfeile dargestellte Kraftkomponente auf die Produktbrücke 204. Die darin enthaltene Querkomponente zerstört die in den Figuren 7 und 9 dargestellte Produktbrücke 204 besonders effektiv. Im Gegensatz dazu kann es bei Trögen 4 mit rechteckigem Querschnitt in der Draufsicht und damit parallel verlaufenden Seitenwänden 14', 16' vorkommen, dass die Produktbrücke 204 durch die Einwirkung der Paddel noch weiter kompaktiert und verfestigt wird, wie es aus den Figuren 8 und 10 verständlich wird.

### Bezugszeichenliste

- 2: Haltegestell
- 4: Trog
- 6: obere Umfangsränder von 4
- 8: obere Umfangsränder von 2
- 10: Rückwand
- 12: Vorderwand
- 14, 14': Seitenwand
- 16, 16': Seitenwand
- 18: Pfeil
- 19: Symmetrieebene
- 20: Rückwand
- 22: Vorderwand
- 24: Seitenwand
- 26: Bodenrinne
- 28: Dosierschnecke
- 30: Antriebsmotor
- 32: Antriebswelle
- 34: Auslassstutzen
- 35: Flansch
- 36: Lageransatz
- 38: Lageransatz
- 40: Lagerungs- und Kupplungsanordnung
- 42: Verbindungswelle
- 44: Träger
- 46: Scharnier
- 48: erstes Rüttel-Paddel
- 50: Rüttel-Paddel
- 52: Schwingwelle
- 54: Schwingwelle
- 56: Kurbelarm
- 58: Kurbelmechanismus
- 60: Kurbelstange
- 62: Kurbelscheibe
- 64: Drehachse
- 66: Anlenkpunkt
- 68: Kurbelscheibenwelle
- 70: Antriebsgetrieberad
- 72: Zahnriemen
- 74: Scharniergelenk
- 76: Scharnierachse
- 78: Schwenkachse
- 80: Verbindungsschwenkgelenk
- 82: Getriebemechanismus
- 84: Kurbelarm
- 86: Kurbelarm
- 88: Kurbelstange
- 102: Haltegestell
- 110: Rückwand
- 130: Antriebsmotor
- 140: Lagerungs- und Kupplungsanordnung
- 142: Verbindungswelle
- 152: Schwingwelle
- 158: Kurbelmechanismus
- 160: Kurbelstange
- 162: Kurbelscheibe
- 170: Antriebsgetrieberad
- 172: Zahnriemen
- 190: Kupplungsbuchse
- 200: Pfeil
- 202: Pfeil
- 204: Produktbrücke
- 206: Arbeitsraum der Dosierschnecke

## Patentansprüche

1. Dosiervorrichtung für Schüttgüter, umfassend ein Haltegestell (2), in dem ein Trog (4) mit einer Dosierschnecke (28) angeordnet ist, ferner einen Antriebsmotor (30) und wenigstens ein erstes Rüttel-Paddel (48), wobei der Trog (4) mindestens zwei sich gegenüber liegende Seitenwände (14, 16) aufweist, mindestens eine dieser Seitenwände (14) flexibel ist und das Rüttel-Paddel (48) an dieser flexiblen Seitenwand (14) angeordnet ist,
**dadurch gekennzeichnet,**
**dass** die Oberkanten der genannten Seitenwände (14, 16) nichtparallel zueinander ausgerichtet sind und
**dass** die Oberkanten der nichtparallelen Seitenwände (14, 16) in Richtung des Auslasses der Dosierschnecke (28) aufeinander zu laufen.

2. Dosiervorrichtung nach Anspruch 1,
**dadurch gekennzeichnet,**
**dass** die Seitenwände (14, 16) des Troges (4) mit den nichtparallelen Oberkanten zum Bodenbereich hin keilförmig aufeinander zu laufen und dass die Dosierschnecke (28) in diesem Bodenbereich des Troges (4) angeordnet ist.

3. Dosiervorrichtung nach einem der vorherigen Ansprüche,
**dadurch gekennzeichnet,**
**dass** der Trog (4) in der Draufsicht von oben eine Trapezform aufweist, wobei die Dosierschnecke (28) im wesentlichen im rechten Winkel zu den parallelen Seiten des Trapezes angeordnet ist.

4. Dosiervorrichtung nach einem der vorherigen Ansprüche,
**dadurch gekennzeichnet,**
**dass** an jeder der genannten sich gegenüber liegenden Seitenwände (14, 16) jeweils mindestens ein Rüttel-Paddel (48, 50) angeordnet ist und beide Seitenwände (14, 16) flexibel sind.

5. Dosiervorrichtung nach einem der vorherigen Ansprüche,
**dadurch gekennzeichnet,**
**dass** der Winkel, den die nichtparallelen Oberkanten einschließen, einen ganzzahligen Bruchteil des Vollkreises bildet und insbesondere 60 Grad beträgt.

6. Dosiervorrichtung nach einem der vorherigen Ansprüche,
**dadurch gekennzeichnet,**
**dass** eine Anordnung von mehreren gleichen Dosiervorrichtungen vorgesehen ist, die im geschlossenen oder offenen Kreis um eine zentrale Abgabestelle herum angeordnet sind.

7. Dosiervorrichtung nach einem der vorherigen Ansprüche,
**dadurch gekennzeichnet,**
**dass** der Antriebsmotor (30) zwischen einer mit der Dosierschnecke (28) gekuppelten Betriebsstellung und
einer entkuppelten Außerbetriebsstellung verschwenkbar ist, dass das bzw. die Rüttel-Paddel (48, 50) mit einer Schwingwelle (57) über einen Schwingantrieb antreibbar ist bzw. sind, dass Mittel für eine Schwingantriebsverbindung zwischen dem Antriebsmotor (30) der Dosierschnecke (28) und der Schwingwelle (52) des Rüttel-Paddels (48) bzw. der Rüttel-Paddel (48, 50) vorgesehen sind.

8. Dosiervorrichtung nach dem vorherigen Anspruch,
**dadurch gekennzeichnet,**
**dass** die Mittel einen mit dem Antriebsmotor (30) antriebsverbundenen Kurbelmechanismus (58) umfassen, der über eine Kurbelstange (60) mit einem an der Schwingwelle (52) angeordneten Kurbelarm (56) verbunden ist.

9. Dosiervorrichtung nach dem vorherigen Anspruch,
**dadurch gekennzeichnet,**
**dass** die Exzentrizität des antriebsmotorseitigen und/oder des schwingwellenseitigen Anlenkpunktes (66; 88, 90, 92) der Kurbelstange (60) variabel ist.

10. Dosiervorrichtung nach Anspruch 8 oder 9,
**dadurch gekennzeichnet,**
**dass** der antriebsmotorseitige Kurbelmechanismus (58) eine drehangetriebene Kurbelscheibe (62) mit einem oder mehreren exzentrisch zur Drehachse (64) der Kurbelscheibe (62) angeordneten Anlenkpunkten (66; 88, 90, 92) für die Kurbelstange (60) umfasst.

11. Dosiervorrichtung nach dem vorherigen Anspruch,
**dadurch gekennzeichnet,**
**dass** die Kurbelscheibe (62) ein Abtriebs-Getrieberad eines vom Antriebsmotor (30) angetriebenen Rädergetriebes ist.

12. Dosiervorrichtung nach dem vorherigen Anspruch,
**dadurch gekennzeichnet,**
**dass** das Abtriebs-Getrieberad (Kurbelscheibe 62) und/oder ein damit zusammenwirkendes Antriebs-Getrieberad (70) des Rädergetriebes zum Zwecke einer Änderung der Übersetzung austauschbar sind.

13. Dosiervorrichtung nach Anspruch 11 oder 12,
**dadurch gekennzeichnet,**
**dass** die Kurbelscheibe (62) eine Zahnriemenscheibe ist, die über einen Zahnriemen (72) mit einem auf der Ausgangswelle (32) des Antriebsmotors (30) angeordneten, als Zahnriemenscheibe ausgebildeten Antriebs-Getrieberad (70) antriebsverbunden ist.

14. Dosiervorrichtung nach einem der Ansprüche 8 bis 13,
**dadurch gekennzeichnet,**
**dass** der antriebsseitige Kurbelmechanismus (58) an einem den Antriebsmotor (30) tragenden, um die Schwenkachse (78) schwenkbar am Haltegestell (2) gelagerten Träger (44) angeordnet ist, und dass die Kurbelstange (60) mit dem schwingwellenseitigen Kurbelarm (56) über ein Scharniergelenk (74) verbunden ist, dessen Scharnierachse (76) bei einer vorgegebenen Schwingstellung des Kurbelarms (56) mit der Schwenkachse (78) des Trägers (44) wenigstens annähernd fluchtet.

15. Dosiervorrichtung nach dem vorherigen Anspruch,
**dadurch gekennzeichnet,**
**dass** die Kurbelstange (60) mit dem Scharniergelenk (74) über ein weiteres Verbindungsschwenkgelenk (80) mit einer zur Scharnierachse (76) und zur Längsachse der Kurbelstange (60) rechtwinklig stehenden Gelenkachse verbunden ist.

16. Dosiervorrichtung nach einem der vorherigen Ansprüche,
**dadurch gekennzeichnet,**
**dass** wenigstens ein weiteres Paddel (50) auf der dem ersten Paddel (48) abgewandten Seite eines Troges (4) im Haltegestell (2) angeordnet ist, und dass eine Schwingwelle (54) des weiteren Paddels (50) mit der Schwingwelle (52) des ersten Paddels (48) über einen Getriebemechanismus (82) gekoppelt ist.

17. Dosiervorrichtung nach einem der Ansprüche 7 bis 15,
**dadurch gekennzeichnet,**
**dass** die Mittel für eine Schwingantriebsverbindung zwischen dem Antriebsmotor (30) und der Schwingwelle (52) als Getriebemechanismus (82) ausgebildet sind, welcher jeweils einen auf jeder Schwingwelle (52, 54) angeordneten Kurbelarm (84, 86) umfasst, und dass die Kurbelarme (84, 86) über eine Kurbelstange (88) miteinander verbunden sind.

## Claims

1. A dosing device for bulk goods, comprising a mounting frame (2) in which a trough (4) with a dosing screw (28) is arranged, further a drive motor (30) and at least one first vibrating paddle (48), the trough (4) having at least two opposing side walls (14, 16), at least one of these side walls (14) being flexible and the vibrating paddle (48) being arranged on said flexible side wall (14), **characterised in that** the upper edges of said side walls (14, 16) are not parallel to one another and that the upper edges of the non-parallel side walls (14, 16) converge in the direction of the outlet of the dosing screw (28).

2. The dosing device as claimed in claim 1, **characterised in that** the side walls (14, 16) of the trough (4) and the non-parallel upper edges converge toward the bottom region in the form of a wedge and that the dosing screw (28) is arranged in this bottom region of the trough (4).

3. The dosing device as claimed in any of the preceding claims, **characterised in that** the trough (4) has a trapezoidal shape in the plan view from above, the dosing screw (28) being arranged substantially at right angles to the parallel sides of the trapezoid.

4. The dosing device as claimed in any of the preceding claims, **characterised in that** at least one respective vibrating paddle (48, 50) is arranged on each of said opposing side walls (14, 16) and both side walls (14, 16) are flexible.

5. The dosing device as claimed in any of the preceding claims, **characterised in that** the angle enclosed by the non-parallel upper edges forms an integer fraction of the full circle and, in particular, is 60°.

6. The dosing device as claimed in any of the preceding claims, **characterised in that** an arrangement of a plurality of identical dosing devices which are arranged in a closed or open circle round a central discharge point is provided.

7. The dosing device as claimed in any of the preceding claims, **characterised in that** the drive motor (30) is pivotal between an operating position coupled to the dosing screw (28) and an uncoupled shutdown position, that the vibrating paddle(s) (48, 50) may be driven with an oscillating shaft (52) via an oscillating drive, that means are provided for an oscillating drive connection between the drive motor (30) of the dosing screw (28) and the oscillating shaft (52) of the vibrating paddle (48) or the vibrating paddles (48, 50).

8. The dosing device as claimed in the preceding claim, **characterised in that** the means comprise a crank mechanism (58) which is connected in terms of drive to the drive motor (30) and is connected via a connecting rod (60) to a crank arm (56) arranged on the oscillating shaft (52).

9. The dosing device as claimed in the preceding claim, **characterised in that** the eccentricity of the drive motor-side and/or oscillating shaft-side link point (66; 88, 90, 92) of the connecting rod (60) is variable.

10. The dosing device as claimed in claim 8 or 9, **characterised in that** the drive motor-side crank mechanism (58) comprises a rotationally driven crank disc (62) with one or more link points (66; 88, 90, 92), arranged eccentrically to the axis of rotation (64) of the crank disc (62), for the connecting rod (60).

11. The dosing device as claimed in the preceding claim, **characterised in that** the crank disc (62) is an output gear-wheel of gearing driven by the drive motor (30).

12. The dosing device as claimed in the preceding claim, **characterised in that** the output gear-wheel (crank disc 62) and/or a drive gear-wheel (70) cooperating therewith of the gearing may be exchanged in order to change the transmission.

13. The dosing device as claimed in claim 11 or 12, **characterised in that** the crank disc (62) is a toothed belt disc connected in terms of drive to a drive gear-wheel (70) which is arranged on the output shaft (32) of the drive motor (30) and is configured as a toothed belt disc, via a toothed belt (72).

14. The dosing device as claimed in any of claims 8 to 13, **characterised in that** the drive-side crank mechanism (58) is arranged on a carrier (44) which carries the drive motor (30) and is mounted pivotally about the pivot axis (78) on the mounting frame (2) and that the connecting rod (60) is connected to the oscillating shaft-side crank arm (56) via a hinged joint (74) of which the hinge axis (76) is at least substantially aligned with the pivot axis (78) of the carrier (44) in a predetermined oscillating position of the crank arm (56).

15. The dosing device as claimed in the preceding claim, **characterised in that** the connecting rod (60) is connected to the hinged joint (74) via a further connecting hinged joint (80) with a joint axis at right angles to the hinge axis (76) and to the longitudinal axis of the connecting rod (60).

16. The dosing device as claimed in any of the preceding claims, **characterised in that** at least one further paddle (50) is arranged in the mounting frame (2) on the side, remote from the first paddle (48), of a trough (4) and that an oscillating shaft (54) of the further paddle (50) is coupled to the oscillating shaft (52) of the first paddle (48) via a gear mechanism (82).

17. The dosing device as claimed in any of claims 7 to 15, **characterised in that** the means for an oscillating drive connection between the drive motor (30) and the oscillating shaft (52) are configured as a gear mechanism (82) which comprises a respective crank arm (84, 86) arranged on each oscillating shaft (52, 54) and **in that** the crank arms (84, 86) are connected to one another via a connecting rod (88).

## Revendications

1. Dispositif de dosage pour des matières en vrac comprenant un châssis (2) recevant une auge (4) et une vis de dosage (28) ainsi qu'un moteur (30) et au moins une palette d'agitateur (48),
l'auge (4) ayant au moins deux parois latérales (14, 16) opposées et au moins l'une (14) de ces parois latérales est souple et la palette d'agitateur (48) est appliquée contre cette paroi latérale souple (14),
**caractérisé en ce que**
les arêtes supérieures des parois latérales (14, 16) ne sont pas parallèles et ces arêtes supérieures non parallèles des parois latérales (14, 16) sont dirigées l'une vers l'autre en direction de la sortie de la vis de dosage (28).

2. Dispositif de dosage selon la revendication 1,
**caractérisé en ce que**
les parois latérales (14, 16) de l'auge (14) dont les arêtes supérieures ne sont pas parallèles, s'écartent suivant une forme de coin, vers la zone de fond et
la vis de dosage (28) est installée dans cette zone de fond de l'auge (4).

3. Dispositif de dosage selon l'une des revendications précédentes,
**caractérisé en ce que**
l'auge (4) présente une forme trapézoïdale en vue de dessus, la vis de dosage (28) étant pratiquement à l'équerre par rapport aux côtés parallèles du trapèze.

4. Dispositif de dosage selon l'une des revendications précédentes,
**caractérisé en ce qu'**
au moins une palette d'agitateur (48, 50) est prévue au niveau de chacune des parois latérales (14, 16) opposées et les deux parois latérales (14, 16) sont souples.

5. Dispositif de dosage selon l'une des revendications précédentes,
**caractérisé en ce que**
l'angle des arêtes supérieures non parallèles correspond à une fraction entière du cercle et notamment à 60°.

6. Dispositif de dosage selon l'une des revendications précédentes,
**caractérisé par**
le montage de plusieurs dispositifs de dosage identiques, répartis suivant un cercle ouvert ou fermé autour d'un point de distribution central.

7. Dispositif de dosage selon l'une des revendications précédentes,
**caractérisé en ce que**
le moteur (30) peut basculer entre une position de fonctionnement couplée à la vis de dosage (28) et une position hors service découplée,
la ou les palettes d'agitateur (48, 50) sont entraînées par un arbre oscillant (57) par l'intermédiaire d'un moyen d'entraînement oscillant,
des moyens étant prévus pour assurer une liaison d'entraînement en oscillation entre le moteur (30) de la vis de dosage (28) et l'arbre oscillant (52) de la palette d'agitateur (48) ou des palettes d'agitateur (48, 50).

8. Dispositif de dosage selon l'une des revendications précédentes,
**caractérisé en ce que**
les moyens comprennent un mécanisme à manivelle (58) coopérant avec le moteur (30), ce mécanisme étant relié par une bielle (60) à un bras de manivelle (56) de l'arbre oscillant (52).

9. Dispositif de dosage selon l'une des revendications précédentes,
**caractérisé en ce que**
le point d'articulation (66 ; 88, 90, 92) du vilebrequin (60), du côté du moteur et/ou du côté de l'arbre oscillant, a une excentricité variable.

10. Dispositif de dosage selon la revendication 8 ou 9,
**caractérisé en ce que**
le mécanisme à manivelle (58) du côté du moteur comporte un disque (62) entraîné en rotation et ayant un ou plusieurs points d'articulation (66 ; 88, 90, 92) excentrés par rapport à l'axe de rotation (64) du disque (62) pour la bielle (60).

11. Dispositif de dosage selon la revendication précédente,
**caractérisé en ce que**
le disque à manivelle (62) est la roue de transmission de sortie d'une transmission à pignon entraînée par le moteur (30).

12. Dispositif de dosage selon la revendication précédente,
**caractérisé en ce que**
la roue de sortie de la transmission (disque à manivelle 62) et/ou une roue de transmission d'entraînement (70) de la transmission à pignon coopérant avec cette roue, peut être remplacée pour modifier le rapport de transmission.

13. Dispositif de dosage selon la revendication 11 ou 12,
**caractérisé en ce que**
le disque à manivelle (62) est une poulie à courroie dentée coopérant par l'intermédiaire d'une courroie dentée (72) avec une roue de transmission d'entraînement (70) en forme de poulie à courroie dentée, portée par l'arbre de sortie (32) du moteur (30).

14. Dispositif de dosage selon l'une des revendications 8 à 13,
**caractérisé en ce que**
le mécanisme à manivelle (58) du côté de l'entraînement est monté sur une poutre (44) portant le moteur (30) et qui peut basculer par rapport au châssis de support (2) autour d'un axe de basculement (78) et
la bielle (60) est reliée par une articulation à charnière (74) au bras de manivelle (56) du côté de l'arbre oscillant, l'axe (76) de cette articulation à charnière étant au moins sensiblement aligné avec l'axe de basculement (78) de la poutre (44) pour une position angulaire prédéterminée du bras (56).

15. Dispositif de dosage selon la revendication précédente,
**caractérisé en ce que**
la bielle (60) est reliée à l'articulation à charnière (74) par une autre articulation (80) ayant un axe perpendiculaire à l'axe (76) de la charnière et à l'axe longitudinal de la bielle (60).

16. Dispositif de dosage selon l'une des revendications précédentes,
**caractérisé par**
au moins une autre palette (50) prévue sur le côté de l'auge (4), à l'opposé de la première palette (48), dans le bâti (2) et l'arbre oscillant (54) de la seconde palette (50) est couplé à l'arbre oscillant (52) de la première palette (48) par un mécanisme de transmission (82).

17. Dispositif de dosage selon l'une des revendications 7 à 15,
**caractérisé en ce que**
les moyens de l'entraînement en oscillation entre le moteur (30) et l'arbre oscillant (52) sont réalisés sous la forme d'un mécanisme de transmission (82) comprenant un bras de manivelle (84, 86) prévu sur chaque arbre oscillant (52, 54) et les bras de manivelle (84, 86) sont reliés l'un à l'autre par une bielle (88).
